# EUROPEAN PATENT SPECIFICATION

(11) **EP 0 863 945 B1**
(45) Date of publication and mention of the grant of the patent: **26.04.2000**
(21) Application number: 96938449.4
(22) Date of filing: 24.11.1996
(51) Int. Cl.: C08L 75/04, C08L 69/00

(54) **EXTRUDED PLASTIC**
EXTRUDIERTER KUNSTSTOFF
PLASTIQUE EXTRUDE

(30) Priority: 29.11.1995 IL 11619295
(43) Date of publication of application: 16.09.1998
(73) Proprietor: Paltough Ltd., 30035 Ramat Yohanan (IL)
(72) Inventor: BEN ZVI, Guy, 30035 Kibbutz Yohanan (IL)
(74) Representative: de Bruijn, Leendert C.
(86) International application number: IL9600165
(87) International publication number: WO9719995

(56) References cited:
- EP-A- 0 218 252
- EP-A- 0 247 480
- EP-A- 0 320 946
- EP-A- 0 658 581
- WO-A-93/22383
- Dialog Information Services, File 351, Dialog accession no. 010437866, WPI accession no. 95-339183/44, Teijin Kasei Ltd: "Polycarbonate resin layered plate, useful for window material - comprises thermoplastic urethane resin layer formed on surface of polycarbonate resin sheet, by thermo- compression bonding or co-extrusion"; & JP,A,7 205 385 (TEIJIN KASEI LTD) 08 august 1995

## Description

The present invention relates to extrusion of plastic materials and more particularly to extrusion of transparent plastic materials.

Various types of extruded transparent plastic materials are known. Extruded polycarbonate is well known and used for a wide variety of applications. Various types of extruded polycarbonate sheets are manufactured and sold under the PALTOUGH trademark by the present applicant/assignee.

When combined with a UV protector, such as taught in European Patent 0247,480, polycarbonate displays good UV resistance.

Polycarbonate is considered to have limited resistance to attack by chemical agents, including those in the atmosphere.

European Patent Application No. 320,946A discloses high flexural modulus polyurethane plastics wherein a polyisocyanate and a particular combination of extenders including cycloalkane diol are reacted optionally in the presence of a minor proportion of high molecular weight polyol.

Patent Application WO-A- 93/22,383 discloses improvement of the tensile stress of a thermoplastic, transparent, aromatic polyester, by incorporating into the polyester a thermoplastic, rigid polyurethane. The resultant transparent blend is particularly useful in making eyeglasses, toothbrushes and screwdriver handles.

Japanese Patent Application No. JP-A-7,205,385 discloses co-extruded products of an RTPU protective coating on a polycarbonate surface, to provide resistance to handling.

European Patent Application No. 247,480A discloses a branched thermoplastic polycarbonate with improved protection against UV light.

The present invention seeks to provide an improved extruded plastic product which displays high resistance to chemical agents.

There is thus provided an extruded plastic product formed of coextruded polycarbonate and thermoplastic polyurethane, characterized in that the thermoplastic polyurethane is rigid and is formed into a layer having a thickness of 50 microns or less.

An embodiment further comprises a UV protective agent. Preferably the UV protective agent is benzotriazole, and may comprise in the region of 10% of the coextruded layer.

There is also provided a method of producing a plastic product comprising coextruding polycarbonate and thermoplastic polyurethane characterized in that the thermoplastic polyurethane is rigid and is formed into a layer of 50 microns or less. Preferably the method also comprises the step of adding a UV protective agent prior to extrusion.

In a preferred embodiment the amount of UV protective agent that is added is approximately ten percent of the co-extruded layer and in a further preferred embodiment the UV protective agent is benzotriazole.

The invention will be understood and appreciated more fully from the following detailed description, taken in conjuction with the drawings in which:
Fig. 1 is a simplified illustration of coextrusion of plastic sheets in accordance with a preferred embodiment of the present invention;
Fig. 2 is a sectional illustration of a plastic sheet constructed and operative in accordance with a preferred embodiment of the present invention;
Fig. 3 is a simplified illustration of an extruded tank liner constructed and operative in accordance with a preferred embodiment of the present invention;
Fig. 4 is a simplified illustration of a billboard constructed and operative in accordance with a preferred embodiment of the present invention;
Fig. 5 is a table of test results of color parameters of a rigid thermoplastic polyurethane with different UV protectors at different concentrations at varying levels of UV exposure; and
Figs. 6 and 7 are graphical representations of some of the test results of Fig. 5.

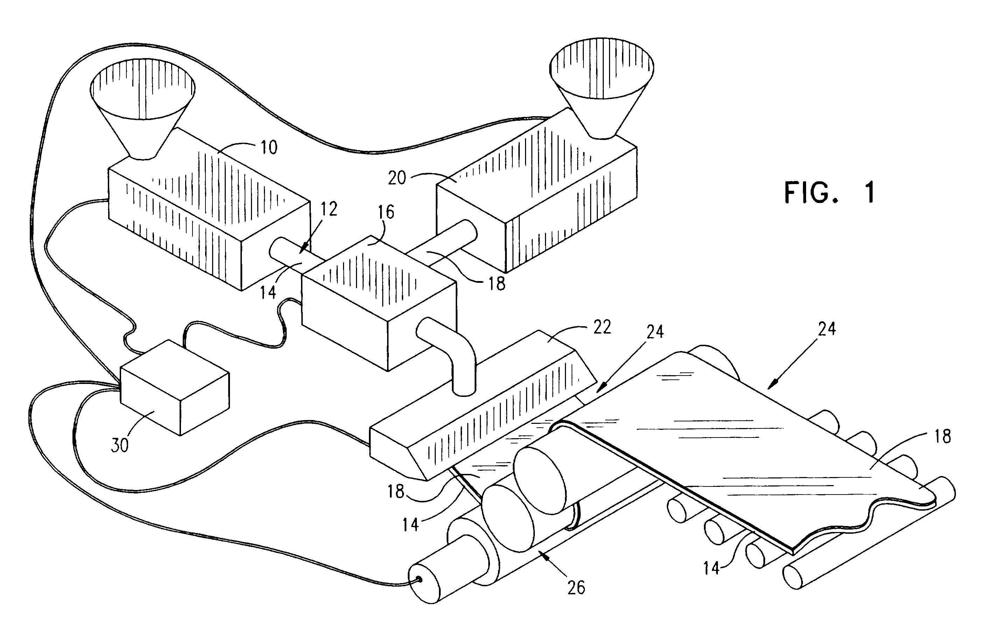

Reference is now made to Fig. 1, which is a simplified illustration of coextrusion of plastic sheets in accordance with a preferred embodiment of the present invention. The coextrusion may be carried out using any suitable coextrusion apparatus, which preferably includes a primary extruder 10 for extruding a bulk sheet 12 of a first polymeric material 14, preferably polycarbonate, of thicknesses from 0.1 to over 15 mm.

A feed block 16 is preferably provided for combining bulk sheet 12 with a coextruded layer of at least another polymeric material 18. In accordance with a preferred embodiment of the present invention, the other polymeric material is a rigid thermoplastic polyurethane, preferably ISOPLAST brand Engineering Thermoplastic Resin. A coextruder 20 is preferably provided for extruding polymeric material 18.

A flat sheet die 22 is preferably provided for extruding a flat sheet 24 of the coextruded polymeric materials 14 and 18, to the desired thickness and width. Alternatively, in place of coextruder 20 and flat sheet die 22, a multi-manifold die (not shown) may be used to combine two or more polymeric layers.

A calender system 26 is preferably provided for polishing the sheet 24. It is appreciated that other conventional equipment for producing flat plastic sheets may be added downstream of calender system 26. Alternatively, a calibrating or corrugating system (not shown) may be used in place of calender system 26, along with appropriate downstream equipment.

Preferably control apparatus 30 is provided for controlling various operations in the coextrusion process. Since ISOPLAST and polycarbonate, or other pairs of polymeric materials, are usually rheologically different, their coextrusion requires control of factors such as tool temperatures, melting temperatures and pressures, feed block flow design, start-up and shutdown conditions and pre-drying conditions. Control apparatus 30 preferably includes appropriate sensors for sensing and controlling factors such as the aforementioned.

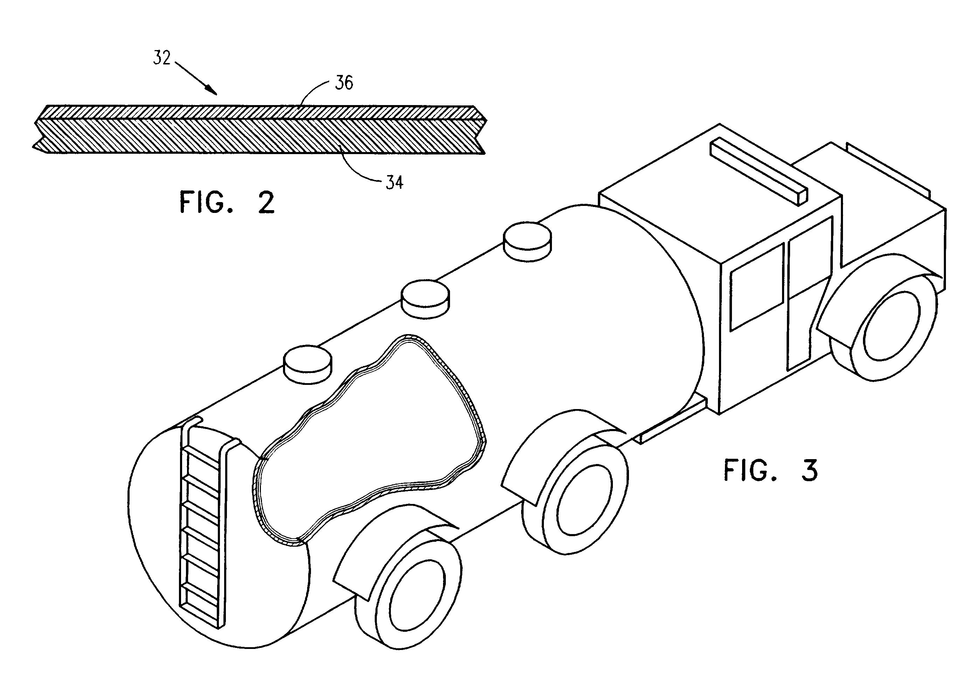

Referring now to Fig. 2, there is shown in sectional illustration a plastic sheet 32 constructed and operative in accordance with a preferred embodiment of the present invention. Sheet 32 is seen to have a relatively thick portion 34, which is preferably formed of polycarbonate or other polymer, and a relatively thin portion 36, formed of rigid thermoplastic polyurethane, preferably ISOPLAST brand Engineering Thermoplastic Resin. Preferably the thickness of portion 36 is less than 50 microns.

According to an alternative embodiment of the present invention, rigid thermoplastic polyurethane, preferably ISOPLAST brand Engineering Thermoplastic Resin, may be extruded alone into sheets or other products.

Additionally in accordance with a preferred embodiment of the present invention, a UV protective agent, such as benzotriazole, may be added to the extruded or co-extruded plastic in suitable proportions, typically about 10%.

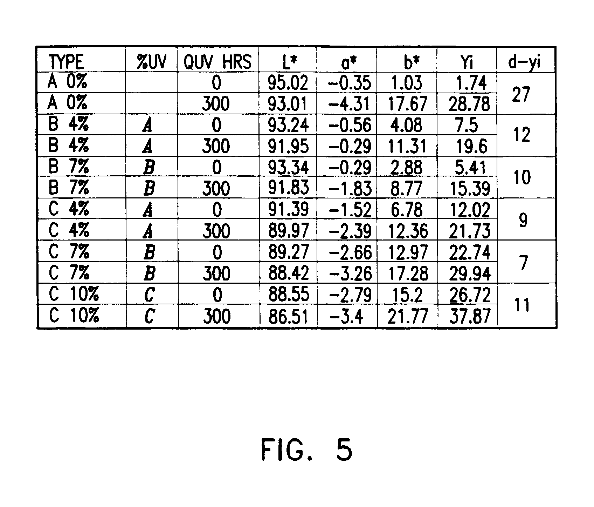

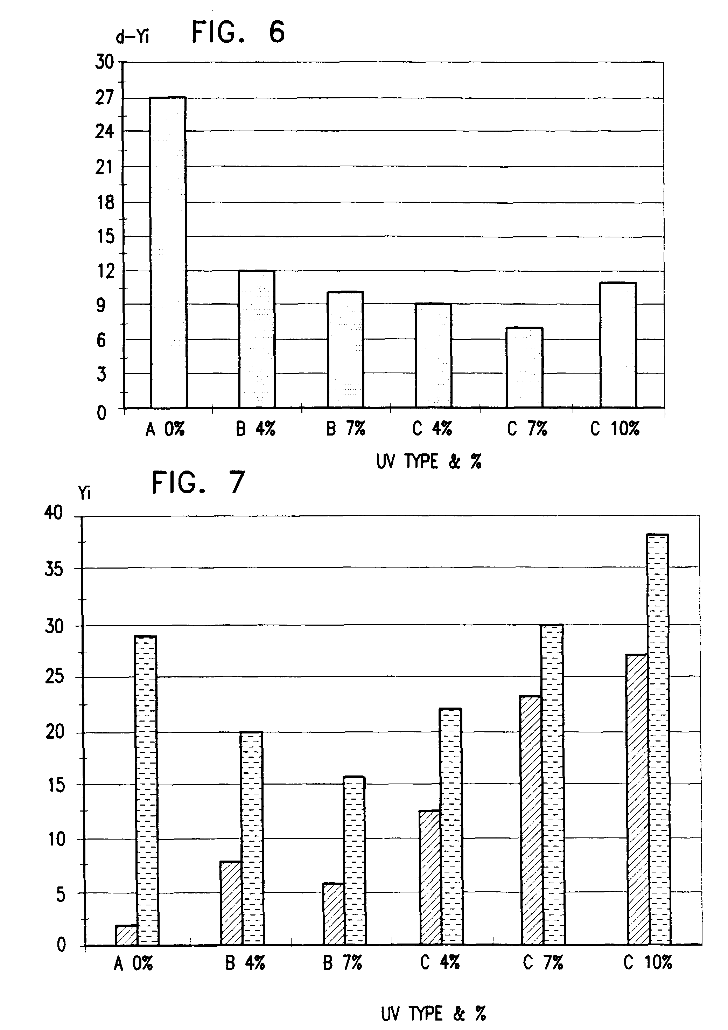

Applicant has carried out several extrusion tests in the scope of the present invention. Some of these test include:
1. Mono-extrusion of ISOPLAST brand Engineering Thermoplastic Resin.
2. Coextrusion of one side of 10 - 100 microns of ISOPLAST brand Engineering Thermoplastic Resin on polycarbonate to find desirable thicknesses for good chemical protection combined with good optical and mechanical properties.
3. Detailed chemical resistance tests which resulted in a broad list of materials normally incompatible with polycarbonate and which are compatible with polycarbonate coextruded with ISOPLAST in accordance with a preferred embodiment of the present invention.
4. Detailed mechanical, thermal, optical and thermoformability tests of sheet coextruded in accordance with a preferred embodiment of the present invention.
5. Two-sided coextrusion of ISOPLAST brand Engineering Thermoplastic Resin on polycarbonate.
6. UV protection tests of UV absorbers in the coextruded layer. A significant improvement has been observed in the rate of yellowing under UV radiation. Results of these tests are shown tabularly in Fig. 5 and graphically in Figs. 6 and 7.

The yellowness tests were performed on three different UV absorbers, A, B and C, according to ASTM (American Society for Testing Materials) D1925 with a Q panel machine which complies with ASTM G53. As is known to persons skilled in the art, L*, a* and b* are color coordinates according to CIE (Commission Internationale de l'Eclairage) 1931.

With proper control of the coextrusion process, a very clear, very tough and chemical resistant sheet may be produced. This sheet is also thermoformable to different articles, such as containers and cups, making it very useful for storing chemical fluids in tough, high temperature (above 100 degrees Celsius) and optically clear applications.

The polycarbonate and ISOPLAST coextruded sheet, constructed in accordance with a preferred embodiment of the present invention, allows the use of polycarbonate in many applications where its limited chemical resistance normally prevents its selection as a viable material. An example of such an application is shown in Fig. 3, which is a simplified illustration of an extruded tank liner constructed and operative in accordance with a preferred embodiment of the present invention.

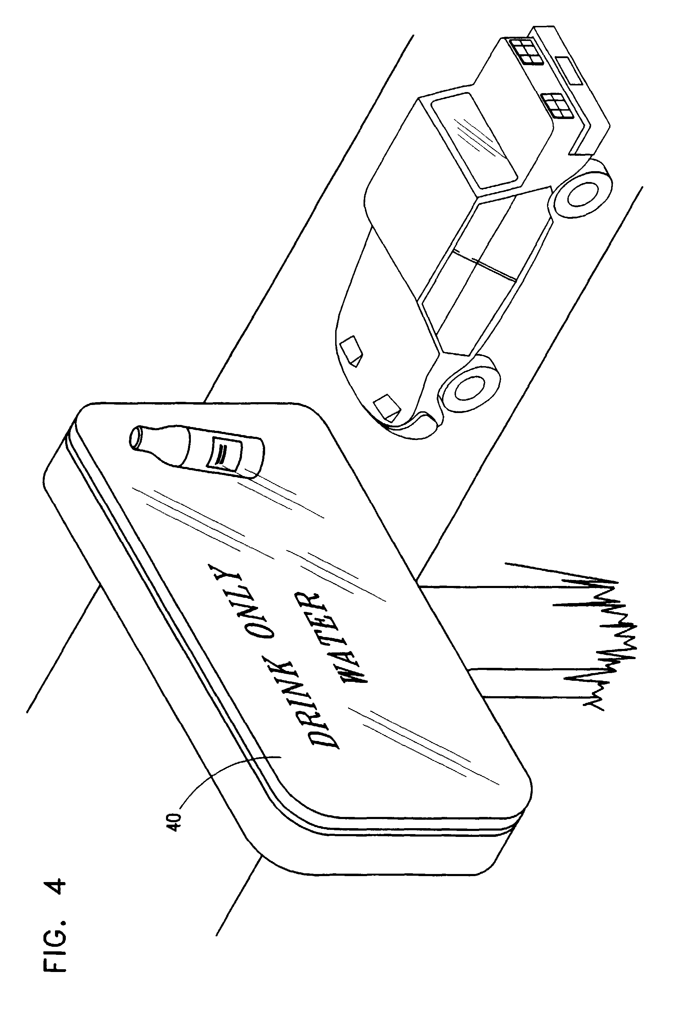

In addition, the coextruded sheet of the present invention enhances the performance of polycarbonate in applications where polycarbonate alone is traditionally used. An example of such an application is shown in Fig. 4 which is a simplified illustration of a billboard constructed and operative in accordance with a preferred embodiment of the present invention. Here a transparent coextruded sheet 40 is disposed over the billboard poster for protecting it from the elements.

It will be appreciated by persons skilled in the art that the present invention is not limited by what has been particularly shown and described hereinabove. Rather the scope of the present invention is defined only by the claims which follow:

## Claims

1. An extruded plastic product formed of coextruded polycarbonate and thermoplastic polyurethane, characterized in that the thermoplastic polyurethane is rigid and is formed into a layer having a thickness of 50 microns or less.

2. An extruded plastic product according to claim 1 and further comprising a UV protective agent.

3. An extruded plastic product according to claim 2 wherein said UV protective agent is benzotriazole.

4. An extruded plastic product according to any of claims 2 and 3 wherein said UV protective agent is in the region of 10% of the coextruded layer.

5. A method of producing a plastic product comprising coextruding polycarbonate and thermoplastic polyurethane characterized in that the thermoplastic polyurethane is rigid and is formed into a layer of 50 microns or less.

6. A method according to claim 5 and also comprising the step of adding a UV protective agent prior to extrusion.

7. A method according to claim 6 wherein the amount of UV protective agent that is added is approximately ten percent of the co-extruded layer.

8. A method according to one of claims 5 and 6 wherein said UV protective agent is benzotriazole.

## Patentansprüche

1. Extrudiertes Kunsstoff-Produkt, das aus gemeinsam extrudiertem Polykarbonat und thermoplastischem Polyurethan gebildet ist, dadurch gekennzeichnet, daß das thermoplastische Polyurethan steif und in Form einer Schicht mit einer Dicke von 50 µm (Mikron) oder weniger ausgebildet ist.

2. Extrudiertes Kunsstoff-Produkt nach Anspruch 1, welches weiterhin ein UV-Schutzmittel enthält.

3. Extrudiertes Kunsstoff-Produkt nach Anspruch 2, wobei das UV-Schutzmittel Benzotriazol ist.

4. Extrudiertes Kunsstoff-Produkt nach einem der Ansprüche 2 und 3, wobei das UV-Schutzmittel im Bereich von 10% der mitextrudierten Schicht ausmacht.

5. Verfahren zur Herstellung eines Kunsstoff-Produkts, das gemeinsam extrudiertes Polykarbonat und thermoplastischem Polyurethan umfaßt, dadurch gekennzeichnet, daß das thermoplastische Polyurethan steif und in Form einer Schicht mit einer Dicke von 50 µm (Mikron) oder weniger ausgebildet ist.

6. Verfahren gemäß Anspruch 5, daß als zusätzlichen Schritt vor dem Extrudieren das Hinzufügen eines UV-Schutzmittels umfaßt.

7. Verfahren gemäß Anspruch 6, worin der Betrag des hinzugefügten UV-Schutzmittels etwa 10 % der mitextrudierten Schicht beträgt.

8. Verfahren nach einem der Ansprüche 5 und 6, wobei das UV-Schutzmittel Benzotriazol ist.

## Revendications

1. Produit en plastique extrudé formé de polycarbonate coextrudé et de polyuréthane thermoplastique, caractérisé en ce que le polyuréthane thermoplastique est rigide et est formé en une couche ayant une épaisseur de 50 microns ou moins.

2. Produit en plastique extrudé selon la revendication 1 et comprenant en outre un agent anti-UV.

3. Produit en plastique extrudé selon la revendication 2, dans lequel ledit agent anti-UV est du benzotriazole.

4. Produit en plastique extrudé selon l'une des revendications 2 et 3, dans lequel ledit agent anti-UV constitue 10 % de la couche coextrudée.

5. Procédé permettant de produire un produit en plastique comprenant du polycarbonate coextrudé et du polyuréthane thermoplastique, caractérisé en ce que le polyuréthane thermoplastique est rigide et est formé en une couche de 50 microns ou moins.

6. Procédé selon la revendication 5 et comprenant également l'étape consistant à ajouter un agent anti-UV avant l'extrusion.

7. Procédé selon la revendication 6, dans lequel la quantité d'agent anti-UV qui est ajoutée est d'environ 10 % de la couche coextrudée.

8. Procédé selon l'une des revendications 5 et 6, dans lequel ledit agent anti-UV est du benzotriazole.
